# EUROPÄISCHE PATENTANMELDUNG

(11) **EP 2 746 631 A1**
(43) Veröffentlichungstag der Anmeldung: **25.06.2014**
(21) Anmeldenummer: 13193020.8
(22) Anmeldetag: 15.11.2013
(51) Int. Cl.: F16K 27/02, F16K 1/52, F24D 19/10, F16K 27/10

(54) **Ventileinsatzelement**

(30) Priorität: 18.12.2012 DE 102012223608
(71) Anmelder: Caradon Stelrad B.V., 2200 Herantals (BE); Wilfer, Manfred, 87534 Oberstaufen (DE)
(72) Erfinder: Wilfer, Manfred, 87534 Oberstaufen (DE); Grauls, Roger, 3971 Heppen (BE)
(74) Vertreter: Bauer, Dirk

(57) **Zusammenfassung**

Die Erfindung betrifft ein Ventileinsatzelement (1, 1') zum Einsatz in ein Verbindungsstück eines Heizkörpers oder eines Heizkörperanschlusses, aufweisend ein Gehäuse (2, 2') sowie mindestens zwei Dichtungselemente (8, 9, 14) zur Abdichtung des Ventileinsatzelements (1, 1') gegen das Verbindungsstück, wobei das Ventileinsatzelement (1, 1') mindestens einen Gewindeabschnitt aufweist, mittels dessen das Ventileinsatzelement (1, 1') mit dem Verbindungsstück verschraubbar ist, und wobei mindestens eines der Dichtungselemente (14) oberhalb des Gewindeabschnitts und mindestens eines der Dichtungselemente (8, 9) unterhalb des Gewindeabschnitts angeordnet sind, wobei beide Dichtungselemente (8, 9, 14) jeweils in eine an dem Gehäuse (2, 2') ausgebildete Nut (12, 13, 13', 16) eingelegt sind und wobei das Gehäuse (2, 2') aus mindestens zwei Gehäuseteilen (23, 24, 25, 29, 30, 31, 35) zusammengesetzt ist, wobei eine Verbindungsstelle, an der die mindestens zwei Gehäuseteile (23, 24, 25, 29, 30, 31, 35) aneinander grenzen, unterhalb des Gewindeabschnitts angeordnet ist. Um ein Ventileinsatzelement zu möglichst großen Teilen, vorzugsweise vollständig, aus Kunststoff fertigen zu können, wobei Nuten zur Aufnahme der Dichtungselemente unter Verwendung eines Urformprozesses ausgebildet werden sollen, wird erfindungsgemäß vorgeschlagen, mindestens die beiden aneinander grenzenden Gehäuseteile (23, 24, 25, 29, 30, 31, 35) jeweils von Kunststoff gebildet sind und gemeinsam mindestens eine der Nuten (12, 13', 16) ausbilden, in die eines der Dichtungselemente (8, 9, 14) eingelegt ist.

## Beschreibung

### Einleitung

Die vorliegende Erfindung betrifft ein Ventileinsatzelement zum Einsatz in ein Verbindungsstück eines Heizkörpers oder eines Heizkörperanschlusses, aufweisend ein Gehäuse sowie mindestens zwei Dichtungselemente zur Abdichtung des Ventileinsatzelements gegen das Verbindungsstück, wobei das Ventileinsatzelement mindestens einen Gewindeabschnitt aufweist, mittels dessen das Ventileinsatzelement mit dem Verbindungsstück verschraubbar ist, und wobei mindestens eines der Dichtungselemente oberhalb des Gewindeabschnitts und mindestens eines der Dichtungselemente unterhalb des Gewindeabschnitts angeordnet sind, wobei beide Dichtungselemente jeweils in eine an dem Gehäuse ausgebildete Nut eingelegt sind und wobei das Gehäuse aus mindestens zwei Gehäuseteilen zusammengesetzt ist, wobei eine Verbindungsstelle, an der die mindestens zwei Gehäuseteile aneinander grenzen, unterhalb des Gewindeabschnitts angeordnet ist.

### Stand der Technik

Ein Ventileinsatzelement der eingangs beschriebenen Art ist beispielsweise aus der DE 10 2006 026 336 B4 bekannt. Diese beschreibt ein Einbauventil, mittels dessen die Möglichkeit besteht, einen voreingestellten maximalen Massenstrom des strömenden Heizfluids, den das Einbauventil konstruktiv vorgibt, selbst dann noch verändern zu können, wenn das Einbauventil bereits in den zugehörigen Heizkörper eingesetzt ist, sich also in seinem Einbauzustand befindet. Eine solche Einstellung wird typischerweise werksseitig vor dem Einbau des Einbauventils vorgesehen und ist anschließend nicht mehr änderbar.

In den Absätzen [0031] und [0032] beschreibt die DE 10 2006 026 336 B4, dass ein Gehäuse des dort offenbarten Einbauventils aus einem Oberteil und einem Unterteil gebildet ist, wobei das Unterteil von Kunststoff gebildet ist, wobei sinnvollerweise das Unterteil und das von Metall gebildete Oberteil unter Zuhilfenahme eines aus Kunststoff gefertigten Montagerings zusammengefügt werden. Die Figuren der genannten Patentschrift zeigen, dass das von Metall gebildete Oberteil eine Nut zur Aufnahme eines Dichtungselements in Form eines O-Rings aufweist. Mittels dieses Dichtungselements wird das Einbauventil gegen ein entsprechendes Aufnahmebauteil abgedichtet. Die Nut ist so ausgebildet, dass in einem durch sie geführten horizontalen Schnitt, das heißt senkrecht zu einer Längsachse des Einbauventils betrachtet, ausgehend von der Längsachse des Einbauventils zwei Seitenwände der Nut "durchschnitten" werden, wobei das Dichtungselement zwischen diesen Seitenwänden der Nut gelagert ist. Das Unterteil weist gleichermaßen eine Nut auf, die zur Aufnahme eines radial wirkenden Dichtungselements dient.

Die Nuten der Dichtungselemente werden gemäß dem Stand der Technik typischerweise mittels spanender Bearbeitung, beispielsweise mittels Fräsen, ausgebildet. Ebenso sind Umformprozesse denkbar, mittels denen eine solche Nut ausgeformt werden könnte. Die Erzeugung einer solchen Nut mittels eines Urformprozesses ist bislang hingegen nur eingeschränkt möglich. Bei einem solchen Urformprozess werden Gussformen, die seitlich einen Gussraum begrenzen, dichtend miteinander in Kontakt gebracht und der Gussraum mit dem jeweiligen Material, das in einem fließfähigen Zustand vorliegt, aufgefüllt. Nach einer Erstarrung des Materials können die Gussformen beziehungsweise Gusshälften von dem gegossenen Körper abgehoben werden. Hohlräume im Inneren des gegossenen Körpers können mittels eines in dem Gussraum angeordneten Kern erzeugt werden.

Nuten an dem Oberteil des Einbauventils gemäß der DE 10 2006 026 336 B4 können mittels des beschriebenen Urformprozesses jedoch nicht erzeugt werden, da die Gussformen, die einen die Nut bildenden Hohlraum um die Seitenwände der Nut herum erzeugen würden, nicht seitlich "abgezogen" werden könnten, sobald der Körper ausgehärtet ist. Bei einer solchen Bewegung der Gussformen würde eine äußere Seitenwand der Nut der Gussform hinderlich im Weg stehen und beim Entfernen der Gussform zerstört werden. Daher ist diese Vorgehensweise nicht möglich. Entsprechend wird im Stand der Technik typischerweise auf die genannten Bearbeitungsverfahren (spanen, umformen) zurückgegriffen, um derartige Geometrien einer Nut zu erzeugen.

In der DE 195 12 494 C1 ist ein Ventileinsatzelement beschrieben, das eine Anschlagfläche aufweist, mittels derer eine maximale Einschraubtiefe des Ventileinsatzelements in ein zugehöriges Verbindungsstück begrenzt wird. Die Anschlagfläche ist von einem Aufsatzring gebildet. Dieser Aufsatzring ist zunächst losgelöst von dem übrigen Gehäuse des Ventileinsatzelements und wird an dem Gehäuse angeordnet. Durch ein Zusammenfügen der beiden Teile - Aufatzring und Gehäuse - wird eine Nut gebildet, in die ein Dichtungselement eingelegt wird. Seitenwände der Nut sind jeweils teilweise von dem Aufsatzring und dem Gehäuse gebildet. Während der Aufsatzring - wie beschrieben - die Anschlagfläche ausbildet, dient das Dichtungselement der Abdichtung des Ventileinsatzelements gegen den Verbindungskörper im Bereich der Anschlagfläche. Der Vorteil der gezeigten Konstruktion liegt in der Austauschbarkeit des Aufsatzrings begründet. Dieser ist so beschaffen, dass er beim Einschrauben des Ventileinsatzelements in das jeweilige Verbindungsstück unter dem wirkenden Anschraubdruck plastisch verformt werden kann. Hierdurch wird eine Gegenkraft ausgelöst, die dem Monteur des Ventileinsatzelements eine Rückmeldung darüber gibt, wie weit das Ventileinsatzelement bereits in das Verbindungsstück eingeschraubt ist. Bei einem anschließenden Ausbau kann der verformte Aufsatzring ersetzt werden.

### Aufgabe

Der vorliegenden Erfindung liegt die Aufgabe zugrunde, ein Ventileinsatzelement zu einem möglichst großen Anteil, vorzugsweise vollständig, aus Kunststoff fertigen zu können, wobei die Nuten der Dichtungselemente ohne spanende und/oder umformende Bearbeitungsprozesse erstellt werden.

### Lösung

Die Aufgabe wird ausgehend von einem Ventileinsatzelement der eingangs beschriebenen Art erfindungsgemäß dadurch gelöst, dass mindestens die beiden aneinander grenzenden Gehäuseteile jeweils von Kunststoff gebildet sind und gemeinsam mindestens eine der Nuten ausbilden, in die eines der Dichtungselemente eingelegt ist.

Unter einer "Nut" im Sinne der vorliegenden Anmeldung wird eine typischerweise um das Ventileinsatzelement umlaufende Ausnehmung verstanden, die von seitlichen Wandungen begrenzt ist und zumindest zu einer Seite geöffnet ist. Diese Öffnung ermöglicht das Einlegen eines Dichtungselements, vorzugsweise in Form eines O-Rings, wobei die Nut durch ihre üblichen seitlichen Wandungen dazu geeignet ist, das Dichtungselement örtlich zu fixieren. Insbesondere ist es dem Dichtungselement nicht möglich, in Richtung einer der Seitenwände aus der Nut heraus verdrängt oder verschoben zu werden.

Das "Gehäuse" des Ventileinsatzelements beschreibt den Körper, der die übrigen Einbauten des Ventileinsatzelements einfasst. Die genannten Einbauten - und hier insbesondere ein in Längsrichtung des Ventileinsatzelements bewegbarer Stößel mit einem an dessen Endabschnitt angeordneten Dichtkörper - ist in einem Inneren des Gehäuses angeordnet. Das Gehäuse kann neben einer äußeren Mantelfläche ebenso eine innere Mantelfläche aufweisen, die einen inneren "Hohlraum" des Ventileinsatzelements in radiale Richtung umschließt. Dies ist beispielsweise im Bereich eines für Ventileinsatzelemente typischen rohrförmigen Anschlussabschnitts der Fall, der radial zu dessen Seiten hin von dem Gehäuse des Ventileinsatzelements radial nach außen begrenzt ist.

Erfindungsgemäß umfasst das Gehäuse mindestens zwei von Kunststoff gebildete Gehäuseteile. Der Erfindung liegt dabei die Idee zugrunde, dass die von Kunststoff gebildeten Gehäuseteile für sich allein genommen mittels eines Urformprozesses hergestellt und erst anschließend zusammengefügt werden, wobei erst durch das Zusammenfügen unterhalb des Gewindeabschnitts des Ventileinsatzelements mindestens eine Nut für eines der Dichtungselemente erzeugt wird. Auf diese Weise ist es möglich, auch im unteren Bereich des Ventileinsatzelements solche Nuten zu erzeugen, die aufgrund ihrer Geometrie ansonsten nicht direkt mittels eines Urformprozesses hergestellt werden können, da ein Ausformprozess die Nut zerstören würde, wie vorstehend beschrieben ist. Die einzelnen Gehäuseteile, die mittels Urformen hergestellt werden, weisen dabei jeweils eine solche Geometrie auf, dass sie in einem Einbauzustand, das heißt in einem zusammengefügten Zustand der Gehäuseteile, die Nut ausbilden. Das heißt, dass die jeweiligen Seitenwände der Nut zum Teil von dem einen Gehäuseteil und zum Teil von dem anderen Gehäuseteil gebildet sind. Die Ausformung einer Nut unter Verwendung von mehr als nur zwei Gehäuseteilen ist ebenso denkbar.

Das erfindungsgemäße Ventileinsatzelement bietet den Vorteil, dass es vollständig ohne den Einsatz nachträglicher ausformender Prozesse wie Fräsen, Drehen oder Fließpressen erzeugt werden kann. Stattdessen können sämtliche Teile besonders schnell und besonders günstig allein mittels Urformen erzeugt werden.

Besonders vorteilhaft ist diese vorgeschlagene Lösung im Hinblick auf Ventileinsatzelemente mit einem rohrförmigen Anschlussabschnitt und einem Anschlagabschnitt, wobei der Anschlussabschnitt mindestens ein umlaufendes Dichtungselement aufweist, mittels dessen der Anschlussabschnitt dichtend an einen Verbindungsabschnitt des Verbindungsstücks anschließt, und der Anschlagabschnitt eine radial nach außen über den Anschlussabschnitt vorstehende Anschlagfläche aufweist, die in einem Einbauzustand des Ventileinsatzelements mit einer korrespondierenden Stirnfläche des Verbindungsstücks zusammenwirkt, wobei der Anschlagabschnitt mindestens ein umlaufendes Dichtungselement aufweist, mittels dessen der Anschlagabschnitt dichtend mit einer korrespondierenden Dichtfläche des Verbindungsstücks zusammenwirkt, wobei zumindest eines der Dichtungselemente des Anschlussabschnitts und/oder des Anschlagabschnitts in eine gemäß mittels mindestens zweier aneinander grenzender Gehäuseteile ausgebildete Nut eingelegt ist. Derartige Ventileinsatzelement kommen typischerweise in Verbindungsstücken mehrplattiger Heizkörper zum Einsatz.

Ein weiterer Vorteil der Möglichkeit der Nutzung der Urformtechnik besteht darin, dass zumindest eines der Gehäuseteile, vorzugsweise sämtliche Gehäuseteile, mittels dessen/denen die Nut ausgebildet wird, von Kunststoff gebildet ist/sind. Die Verwendung von Kunststoff erlaubt die Herstellung einer Vielzahl einzelner Gehäuseteile in einem einzigen Spritzgussprozess, wodurch insbesondere die Herstellungskosten für Ventileinsatzelemente reduziert werden können.

In einer besonders vorteilhaften Ausgestaltung des Ventileinsatzelements ist das Gehäuse von insgesamt drei Gehäuseteilen gebildet, wobei vorzugsweise eine erste Verbindungsstelle, an der ein oberes Gehäuseteil und ein mittleres Gehäuseteil aneinander grenzen, oberhalb des Gewindeabschnitts angeordnet ist und eine zweite Verbindungsstelle, an der das mittlere Gehäuseteil und ein unteres Gehäuseteil aneinander grenzen, unterhalb des Gewindeabschnitts angeordnet sind. In dieser Ausführung ist es möglich, die Nuten beider Dichtungselemente mittels des Zusammenwirkens jeweils mehrerer Gehäuseteile zu bilden, nämlich jeweils mittels zweier Gehäuseteile. Ein weiteres Gehäuseteil ist nicht erforderlich, um weitere technische Vorteile zu erzielen. Somit stellt die Anzahl von drei Gehäuseteilen einen optimalen Kompromiss zwischen dem Wunsch nach möglichst wenigen Einzelteilen und dem Wunsch nach einer möglichst einfachen Bildung der Nuten für die Dichtungselemente dar.

Zwar können zunächst separate Gehäuseteile auch zusammengefügt werden, ohne dabei gemeinsam eine Nut zu begrenzen bzw. zu bilden, zur Ausnutzung der Mehrteiligkeit ist es gleichwohl besonders von Vorteil, wenn die mindestens zwei Nuten, in die die Dichtungselemente eingelegt sind, mittels Zusammenwirken aneinander grenzender Gehäuseteile gebildet sind. Auf diese Weise kann eine vermeintlich unnötige Mehrteiligkeit und damit einhergehende Komplikation der Herstellung des Ventileinsatzelements vermieden werden.

In einer Ausführungsform des erfindungsgemäßen Ventileinsatzelements ist vorgesehen, dass das Dichtungselement, das unterhalb des Gewindeabschnitts angeordnet ist, zumindest teilweise über eine untere Stirnfläche des Ventileinsatzelements vorsteht, sodass es in einem Einbauzustand, in dem das Ventileinsatzelement in das Verbindungsstück eingeschraubt ist, als axiale Dichtung wirkt. Diese Art der Abdichtung des Ventileinsatzelements gegen das Einsatzstück ist in der Praxis am weitesten verbreitet. Eine entsprechende Ausführung des erfindungsgemäßen Ventileinsatzelements ermöglicht daher eine Kompatibilität mit den bestehenden Systemen, so dass ein Austausch bereits verbauter Ventileinsatzelemente möglich ist.

Besonders von Vorteil ist die Verwendung eines thermoplastischen Kunststoffs, da dieser zum einen besonders gut in einem Spritzgussverfahren verarbeitet werden kann und zum anderen schweißbar ist. Das heißt, dass aus einem solchen Kunststoff gefertigte Gehäuseteile besonders gut mittels Schweißen miteinander verbunden werden können, um schließlich zusammen das Gehäuse des Ventileinsatzelements zu bilden.

Hinsichtlich der mechanischen Eigenschaften des späteren Gehäuses ist es besonders von Vorteil, wenn der Kunststoff faserverstärkt ist. Die Verstärkung hat insbesondere eine höhere Formstabilität des entsprechenden Gehäuseteils unter Temperaturbelastung sowie höhere Zugfestigkeiten des Materials zur Folge. Letzteres begünstigt die Dauerhaftigkeit des aus dem Kunststoff gebildeten Bauteils.

Um einzelne aus Kunststoff hergestellte Gehäuseteile miteinander zu verbinden kann es gleichermaßen sinnvoll sein, diese mindestens zwei der von Kunststoff gebildeten Gehäuseteile
- mittels Ultraschallschweißen miteinander zu verschweißen,
- miteinander zu verkleben oder
- unter Ausbildung eines Formschlusses lediglich "zusammenzufügen", wobei es sowohl denkbar ist, Clip- oder Klickverbindungen vorzusehen, wobei derart verbundene Gehäuseteile zumindest einer gewissen äußeren Belastung standhalten, ohne sich wieder voneinander zu lösen, als auch keinerlei Kraft übertragende Verbindung vorzusehen, so dass die einzelnen Gehäuseteile im Wesentlichen ohne äußeren Krafteinfluss wieder voneinander ablösbar sind.

Insbesondere der letztgenannte Fall der Zusammenfügung der einzelnen Gehäuseteile ohne nennenswerte gegenseitige Fixierung kann insoweit sinnvoll sein, als die einzelnen Gehäuseteile spätestens dann in einem sicheren Verbund vorliegen, sobald das Ventileinsatzelement in das jeweilig korrespondierende Verbindungsstück eingeschraubt ist, wodurch sämtliche Gehäuseteile in ihrer Lage fixiert und zusammengedrückt werden.

### Ausführungsbeispiele

Die vorstehend beschriebene Erfindung wird nachfolgend anhand zweier Ausführungsbeispiele, die in den Figuren dargestellt sind, näher erläutert.

Es zeigt:
- Fig. 1:: Ein erstes erfindungsgemäßes Ventileinsatzelement in einem Vertikalschnitt,
- Fig. 2:: Ein weiteres erfindungsgemäßes Ventileinsatzelement in einem Vertikalschnitt und
- Fig. 3:: Ein Detail eines oberen Endabschnitts einer Stellbuchse eines Ventileinsatzelements.

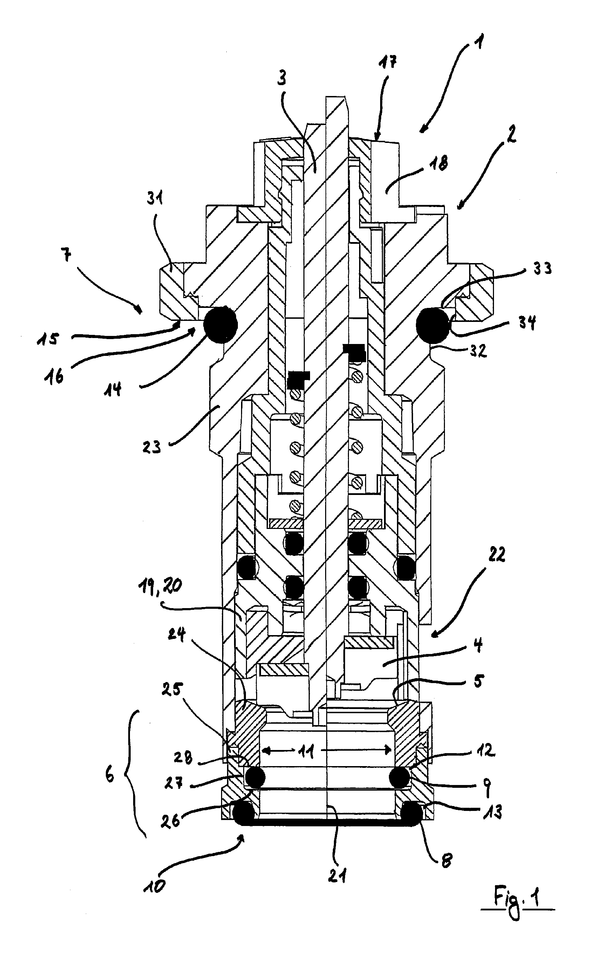

Ein erstes Ausführungsbeispiel, das in Figur 1 dargestellt ist, zeigt ein Ventileinsatzelement **1** umfassend ein Gehäuse **2**, einen axial im Inneren des Ventileinsatzelements **1** verschieblichen Stößel **3**, einen in einem Endabschnitt des Stößels **3** angeordneten Dichtkörper **4** und einen mit dem Dichtkörper **4** korrespondierenden Dichtsitz **5.** Ferner weist das Ventileinsatzelement **1** einen Anschlussabschnitt **6** auf, der mit einem nicht dargestellten Verbindungsabschnitt eines gleichfalls nicht dargestellten Verbindungsstücks dichtend eingreift beziehungsweise eingreifen kann. Außerdem weist das Ventileinsatzelement **1** einen Anschlagabschnitt **7** auf, der in einem Einbauzustand des Ventileinsatzelements **1,** in dem selbiges in das Verbindungsstück eingeschraubt ist, an einer korrespondierenden Stirnfläche des Verbindungsstücks anschlägt.

Ferner weist das gezeigte Ventileinsatzelement **1** eine Einstelleinrichtung **17** auf, die eine drehbare Einstellkappe **18** und eine mit der Einstellkappe **18** drehsteif gekoppelte Stellbuchse **19** umfasst. Diese Stellbuchse **19** weist einen rohrförmigen Einstellabschnitt auf, dessen Wandung **20** einen in Figur 1 nicht gezeigten rechteckförmigen Durchbruch aufweist. Durch ein Verdrehen der Einstellkappe **18** der Einstelleinrichtung **17** kann die Stellbuchse **19** relativ zu dem Gehäuse **2** des Ventileinsatzelements **1** um eine Längsachse **21** des Ventileinsatzelements **1** verdreht werden, wobei ein offener Durchflussquerschnitt **22,** der in einer Wandung des Gehäuses **2** angeordnet ist, mittels der Wandung **20** der Stellbuchse **19** teilweise blockiert oder verschlossen werden kann. Auf diese Weise ist ein maximal möglicher, durch das Ventileinsatzelement **1** fließender Massenstrom einstellbar.

Der Anschlussabschnitt **6** des Ventileinsatzelements **1** weist zwei separate Dichtungselemente **8, 9** auf, die jeweils in Form von O-Ringen vorliegen. Das Dichtungselement **8** ist an einem dem Anschlagabschnitt **7** abgewandten Ende **10** des Gehäuses **2** des Ventileinsatzelements **1** angeordnet und ist dazu geeignet, mit einer planen Dichtfläche des nicht dargestellten Verbindungsstücks dichtend einzugreifen, wobei das Dichtungselement **8** um ein gewisses Maß aus dessen Nut **13** vorsteht, so dass es beim Eingriff mit der Dichtfläche des Verbindungsstücks leicht gequetscht wird und dadurch seine dichtende Wirkung entfaltet. Es bildet somit eine so genannte "axiale Dichtung" des Ventileinsatzelements **1.**

Das andere Dichtungselement **9** ist an einer inneren Mantelfläche des Gehäuses **2** angeordnet, wobei es in radiale Richtung betrachtet über die innere Mantelfläche des Gehäuses **2** vorsteht und somit zu einem dichtenden Eingriff mit einem gegebenenfalls vorhandenen rohrförmigen Verbindungsstutzen des nicht dargestellten Verbindungsstücks geeignet ist. Das Dichtungselement **9** kann einen solchen Verbindungsstutzen, dessen Außendurchmesser im Wesentlichen einem Innendurchmesser **11** des Gehäuses **2** im Anschlussabschnitt entsprechen würde, "umschließen" und dabei dichtend einfassen. Durch das leichte Vorstehen des Dichtungselements **9** über dessen Nut **12** wird selbiges beim "Überstülpen" des Verbindungsstutzens leicht gequetscht, wobei es dichtend mit einer äußeren Mantelfläche des Verbindungsstutzens eingreift.

Ferner ist im Anschlagabschnitt **7** des Ventileinsatzelements **1** ein weiteres Dichtungselement **14** in Form eines O-Rings angeordnet, wobei das Dichtungselement **14** einen größeren Durchmesser aufweist, als die im Anschlussabschnitt **6** befindlichen Dichtungselemente **8, 9.** Der Anschlagabschnitt **7** weist eine radial über den Anschlussabschnitt **6** des Ventileinsatzelements **1** vorstehende Anschlagfläche **15** auf, die dazu geeignet ist, mit einer korrespondierenden Stirnfläche des Verbindungsstücks zusammenzuwirken. Insbesondere markiert ein Zustand, bei dem die Anschlagfläche **15** des Anschlagabschnitts **7** mit der Stirnfläche des Verbindungsstücks in Kontakt gerät, einen Einbauzustand des Ventileinsatzelements **1**, der dadurch gekennzeichnet ist, dass das Ventileinsatzelement **1** nicht weiter in das Verbindungsstück eingeschraubt werden kann.

Das Dichtungselement **14** ist in eine Nut **16** eingelegt, die in einer äußeren Mantelfläche des Gehäuses **2** ausgebildet ist. Dabei steht das Dichtungselement **14** ein gewisses Maß aus der Nut **16** radial nach außen vor, so dass es im Einbauzustand des Ventileinsatzelements **1** durch eine innere Mantelfläche einer Aufnahme des Verbindungsstücks leicht gequetscht wird. Außerdem steht das Dichtungselement **14** axial nach unten aus der Nut **16** vor, so dass es beim Anschlag der Anschlagfläche **15** an der korrespondierenden Stirnfläche des Verbindungsstücks auch in axiale Richtung gequetscht wird. Durch diese Quetschungen und die dadurch bewirkte Rückstellkraft in dem Dichtungselement **14** wird eine Dichtwirkung desselben begünstigt.

Das Gehäuse **2** ist im gezeigten Beispiel aus insgesamt vier einzelnen Gehäuseteilen **23**, **24**, **25**, **31** gebildet, die allesamt von einem faserverstärkten thermoplastischen Kunststoff gebildet sind. Die Gehäuseteile **23**, **24**, **25** sind mittels Ultraschallschweißen in Kraft übertragender Weise zusammengefügt. Die beiden oberen Gehäuseteile **23**, **31** greifen hingegen lediglich formschlüssig miteinander ein und sind im Wesentlichen kraftlos voneinander trennbar. Der Formschluss zwischen beiden Gehäuseteilen **23**, **31** wird mittels korrespondierender Zahnprofile erreicht, die sich ineinander verhaken. Auf diese Weise kann eine relative Verdrehbarkeit der Gehäuseteile **23**, **31** zueinander blockiert werden. Sämtliche Gehäuseteile **23**, **24**, **25**, **31** sind mittels Spritzgießen hergestellt worden, wobei eine nachträgliche Bearbeitung der Gehäuseteile **23**, **24**, **25**, **31** nicht erforderlich ist.

Die oberen Gehäuseteile **23**, **31**, bilden die die Nut **16** für das Dichtungselement **14** aus. Dabei ist die Nut **16** insgesamt von drei Seitenwandteilen **32**, **33**, **34** gebildet, wobei die Seitenwandteile **32**, **33** von dem Gehäuseteil **23** und der Seitenwandteil **34** von dem Gehäuseteil **31** gebildet sind. Die Nut **16** ist demzufolge durch das Zusammenwirken der beiden Gehäuseteile **23**, **31.** Aus Figur 1 ist klar ersichtlich, dass die Nut **16** nicht ohne Weiteres - insbesondere nicht ausschließlich mittels eines Urformprozesses - hätte hergestellt werden können, wenn die Gehäuseteile **23**, **31** integral, das heißt einstückig, miteinander ausgeformt wären. In diesem Fall hätte die Nut **16** beispielsweise mittels einer spanenden Nachbearbeitung gebildet werden müssen, um die gezeigte Form zu erlangen und den radial innen liegenden Bereich hinter dem Gehäuseteil **31** zu hinterschneiden.

Diess zweiteilige Ausbildung einer Nut trifft nicht auf die Nut **13** zu, die allein in dem unteren Gehäuseteil **25** des Anschlussabschnitts **6** gebildet ist. Die Nut **13** kann ohne Weiteres durch eine entsprechende Ausformung zweier Gusshälften eines Spritzgießwerkzeugs erzeugt werden, wobei relativ zum dargestellten Ventileinsatzelement **1** betrachtet die Gusshälften für das untere Gehäuseteil **25** in eine Richtung parallel zur Längsachse **21** des Ventileinsatzelements **1** bewegt wurden.

Letzteres gilt gleichermaßen für das obere Gehäuseteil **24** des Anschlussabschnitts **6**, das zwischen den anderen beiden Gehäuseteilen **23, 25** angeordnet ist. Auch dieses konnte - relativ zur Figur 1 betrachtet - durch vertikales, das heißt längsachsparalleles Bewegen zweier Gusshälften eines Spritzgusswerkzeugs erzeugt werden.

Die erfindungsgemäße Ausbildung einer Nut ist im gezeigten Beispiel ferner bei Nut **12** realisiert. Nut **12** weist insgesamt drei Seitenwandteile **26**, **27**, **28** auf, die die Nut **12** in dem gezeigten Vertikalschnitt betrachtet seitlich begrenzen und das Dichtungselement **8** einfassen. Der untere Seitenwandteil **26** sowie der seitliche Seitenwandteil **27** sind von dem unteren Gehäuseteil **25** des Anschlussabschnitts **6** gebildet, während der obere Seitenwandteil **28** von dem Gehäuseteil **24** gebildet ist. Beide Gehäuseteile **24**, **25** bilden demzufolge gemeinsam die Nut **12** aus, wobei die Gehäuseteile **24**, **25** aneinander angrenzen und miteinander eingreifen.

Der gezeigte Vertikalschnitt verdeutlicht, dass die Nut **12** nicht direkt im Zuge eines Spritzgusses hätte erzeugt werden können und somit eine einstückige Ausbildung des Gehäuses **2** des Ventileinsatzelements **1** zumindest insoweit nicht möglich ist, als auf anschließende spanende oder umformende Verfahrensschritte verzichtet werden soll. Insbesondere hätte die gezeigte (zusammengesetzte) Geometrie des Gehäuses **2** nicht zerstörungsfrei aus einem Spritzgießwerkzeug "ausgeschalt" werden können, das heißt entweder die Gusshälften oder der Kern des Spritzgießwerkzeugs hätten weder in horizontale noch in vertikale Richtung entfernt werden können, da die Nut **12** die Bewegung blockiert hätte. Dies gilt im Übrigen analog für die bereits beschriebene Nut **16.** Durch die erfindungsgemäße Zusammensetzung des Gehäuses **2** bei gleichzeitiger Ausbildung einer Nut durch mindestens zwei Gehäuseteile **23**, **24**, **25**, **31** ist dieses Problem gelöst worden.

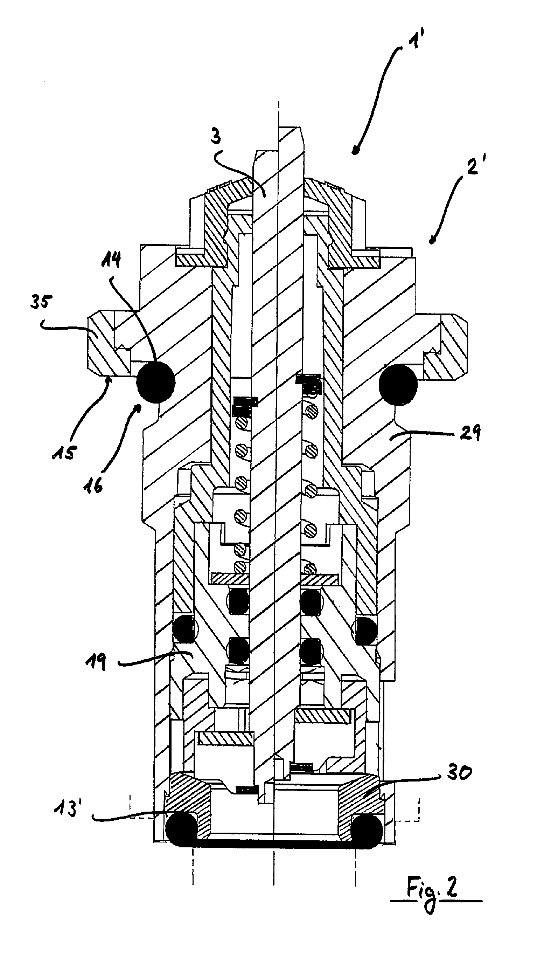

Ein weiteres Ausführungsbeispiel, das in Figur 2 dargestellt ist, zeigt ein weiteres erfindungsgemäßes Ventileinsatzelement **1'**, dessen Gehäuse **2'** aus lediglich drei einzelnen Gehäuseteilen **29**, **30**, **35** zusammengesetzt ist. Wie bereits im ersten Ausführungsbeispiel sind die drei Gehäuseteile **29**, **30**, **35** von faserverstärktem thermoplastischem Kunststoff gebildet. Im Unterschied zum Ventileinsatzelement **1** gemäß dem vorstehend beschriebenen ersten Beispiel weist das Ventileinsatzelement **1'** in dessen Anschlussabschnitt **6** keine radiale Dichtung **9** auf. Dies hat zur Folge, dass das Ventileinsatzelement **1'** nicht mit solchen Verbindungsstücken kompatibel ist, die einen rohförmigen Verbindungsabschnitt aufweisen.

Das Ventileinsatzelement **1'** weist an seinem dem Anschlagabschnitt **7** abgewandten Ende **10** eine Nut **13'** auf, die von ihrer Funktion her zu der Nut **13** des Ventileinsatzelements **1** insoweit identisch ist, als sie zur Aufnahme des Dichtungselements **8** dient, das zur axialen Abdichtung des Ventileinsatzelements **1'** gegen eine Dichtfläche des nicht dargestellten Verbindungsstücks geeignet ist. Allerdings ist die Nut **13'** im Unterschied zur vorbeschriebenen Nut **13** bei dem Ventileinsatzelement **1'** durch das Zusammenwirken der beiden Gehäuseteile **29**, **30** des Gehäuses **2'** gebildet. Die Bildung der Nut **13'** auf diese erfindungsgemäße Weise ist besonders einfach möglich.

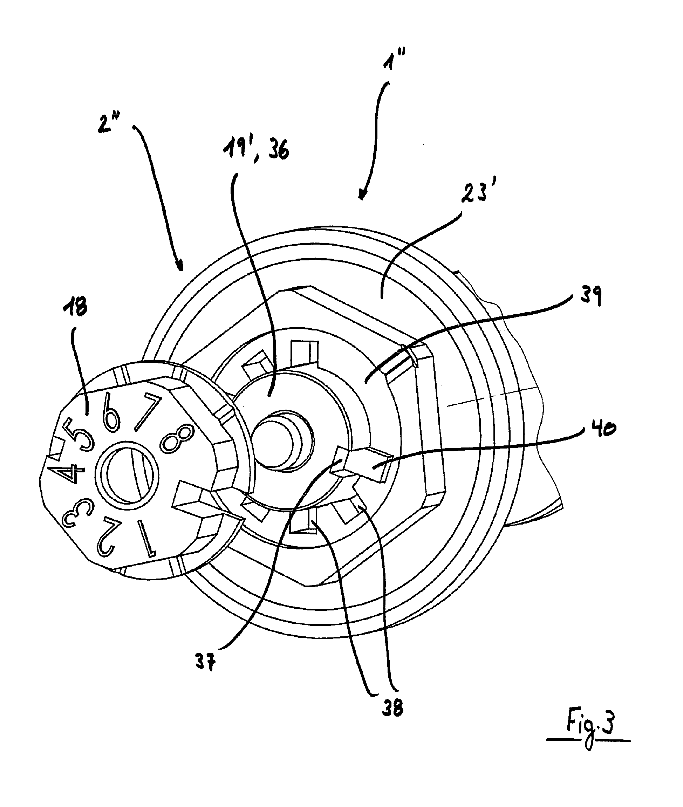

In Figur 3 ist schließlich eine perspektivische Ansicht eines oberen Endes eines erfindungsgemäßen Ventileinsatzelements **1"** gezeigt, wobei hier ein Gehäuseteil **23'** sichtbar ist. In das dort gezeigte Gehäuse **2"** ist eine Stellbuchse **19'** eingesetzt, die vorstehend im Zusammenhang mit dem Ausführungsbeispiel gemäß Figur 1 bereits anhand der Stellbuchse **19** in ihrer Funktion beschrieben ist. Die Stellbuchse **19'** weist einen Einstellabschnitt **36** auf, der an dessen äußerer Mantelfläche eine Stellnut **37** umfasst. Das Gehäuseteil **23'** weist acht zu dieser Stellnut **37** korrespondierende Gehäusenuten **38** auf. Diese Gehäusenuten **38** sind in einem korrespondierenden Feststellabschnitt **39** des Gehäuseteils **23'** vorgesehen, wobei der Feststellabschnitt **39** integral mit dem Gehäuseteil **23'** ausgeformt ist. Das heißt, dass der Feststellabschnitt **39** zusammen mit dem übrigen Gehäuseteil **23'** in einem einzigen Spritzgussvorgang ausgeformt wurde. Die Gehäusenuten **38** wurden mittels eines entsprechenden Kerns in der Spritzgussform ausgespart.

In einem Kalibrierungszustand, in der das Ventileinsatzelement **1"** noch nicht in ein korrespondierendes Verbindungsstück eingesetzt ist, kann die Stellbuchse **19'** relativ zu dem Gehäuse **2"** verdreht werden, wodurch der maximal mögliche Massenstrom, der das Ventileinsatzelement **1"** durchströmen kann, eingestellt werden kann (siehe oben). Hierzu kann sich der Anwender der Einstellkappe **18** bedienen, die hier in einer Explosionsdarstellung gezeigt ist. Die Einstellkappe **18** ist ansonsten drehfest mit der Stellbuchse **19'** verbunden, so dass ein auf die Einstellkappe **18** aufgebrachtes Drehmoment auf die Stellbuchse **19'** übertragen werden kann und somit zu einer Verdrehung der Stellbuchse **19'** führt.

Sobald die gewünschte Einstellung der Stellbuchse **19'**durch Verdrehen der Einstellkappe **18** erreicht ist, kann diese Stellung durch eine Verbindung der Stellbuchse **19'** mit dem Gehäuseteil **23'** fixiert beziehungsweise finalisiert werden. Dies ist besonders einfach dadurch möglich, dass die Stellnut **37** und eine jeweils fluchtend angeordnete Gehäusenut **38** mittels eines Einschubstifts **40** formschlüssig miteinander verbunden werden. Wie in Figur 3 gezeigt, wird der Einschubstift **40** typischerweise so weit in die Stellnut **37** beziehungsweise die Gehäusenut **38** eingeschoben, dass er nicht ohne Weiteres wieder entfernt werden kann. Auf diese Weise ist sichergestellt, dass eine nachträgliche Veränderung der relativen Stellung der Stellbuchse **19'** und des Gehäuses **2"** zueinander nicht von Unbefugten verändert werden kann. Dies ist insbesondere in öffentlichen Gebäuden häufig erwünscht, weshalb entsprechende Ventileinsatzelemente mitunter auch als "Behördenmodell" bezeichnet werden.

Durch die integrale Ausführung der Gehäusenuten **38** an dem Gehäuse **2"** wird eine besonders einfach handhabbare Einstellmöglichkeit geschaffen, den maximalen Massenstrom durch das Ventileinsatzelement **1"** festzulegen. Insbesondere sind hierzu keine unterschiedlichen Bauteile notwendig, da die Einstellung der Stellbuchse **19'** frei gewählt und anschließend mittels des Einschubstifts **40** fixiert werden kann.

### Bezugszeichenliste

- 1, 1', 1": Ventileinsatzelement
- 2, 2', 2": Gehäuse
- 3: Stößel
- 4: Dichtkörper
- 5: Dichtsitz
- 6: Anschlussabschnitt
- 7: Anschlagabschnitt
- 8: Dichtungselement
- 9: Dichtungselement
- 10: Ende
- 11: Innendurchmesser
- 12: Nut
- 13, 13': Nut
- 14: Dichtungselement
- 15: Anschlagfläche
- 16: Nut
- 17: Einstelleinrichtung
- 18: Einstellkappe
- 19, 19': Stellbuchse
- 20: Wandung
- 21: Längsachse
- 22: Durchflussquerschnitt
- 23, 23': Gehäuseteil
- 24: Gehäuseteil
- 25: Gehäuseteil
- 26: Seitenwandteil
- 27: Seitenwandteil
- 28: Seitenwandteil
- 29: Gehäuseteil
- 30: Gehäuseteil
- 31: Gehäuseteil
- 32: Seitenwandteil
- 33: Seitenwandteil
- 34: Seitenwandteil
- 35: Gehäuseteil
- 36: Einstellabschnitt
- 37: Stellnut
- 38: Gehäusenut
- 39: Feststellabschnitt
- 40: Einschubstift

## Patentansprüche

1. Ventileinsatzelement (1, 1') zum Einsatz in ein Verbindungsstück eines Heizkörpers oder eines Heizkörperanschlusses, aufweisend ein Gehäuse (2, 2') sowie mindestens zwei Dichtungselemente (8, 9, 14) zur Abdichtung des Ventileinsatzelements (1, 1') gegen das Verbindungsstück, wobei das Ventileinsatzelement (1, 1') mindestens einen Gewindeabschnitt aufweist, mittels dessen das Ventileinsatzelement (1, 1') mit dem Verbindungsstück verschraubbar ist, und wobei mindestens eines der Dichtungselemente (14) oberhalb des Gewindeabschnitts und mindestens eines der Dichtungselemente (8, 9) unterhalb des Gewindeabschnitts angeordnet sind, wobei beide Dichtungselemente (8, 9, 14) jeweils in eine an dem Gehäuse (2, 2') ausgebildete Nut (12, 13, 13', 16) eingelegt sind und wobei das Gehäuse (2, 2') von mindestens zwei Gehäuseteilen (23, 24, 25, 29, 30, 31, 35) gebildet ist, wobei eine Verbindungsstelle, an der die mindestens zwei Gehäuseteile (23, 24, 25, 29, 30, 31, 35) aneinander grenzen, unterhalb des Gewindeabschnitts angeordnet ist, **dadurch gekennzeichnet, dass** mindestens die beiden aneinander grenzenden Gehäuseteile (23, 24, 25, 29, 30, 31, 35) jeweils von Kunststoff gebildet sind und gemeinsam mindestens eine der Nuten (12, 13', 16) ausbilden, in die eines der Dichtungselemente (8, 9, 14) eingelegt ist.

2. Ventileinsatzelement (1, 1') nach Anspruch 1, **dadurch gekennzeichnet, dass** das Gehäuse (2, 2') aus drei Gehäuseteilen (23, 24, 25, 29, 30, 31, 35) zusammengesetzt ist, wobei vorzugsweise eine erste Verbindungsstelle, an der ein oberes Gehäuseteil (31, 35) und ein mittleres Gehäuseteil (23, 29) aneinander grenzen, oberhalb des Gewindeabschnitts angeordnet ist und eine zweite Verbindungsstelle, an der das mittlere Gehäuseteil (23, 29) und ein unteres Gehäuseteil (24, 25, 30) aneinander grenzen, unterhalb des Gewindeabschnitts angeordnet sind.

3. Ventileinsatzelement (1, 1') nach Anspruch 1 oder 2, **dadurch gekennzeichnet, dass** sämtliche Gehäuseteile (23, 24, 25, 29, 30, 31, 35) von Kunststoff gebildet sind.

4. Ventileinsatzelement (1, 1') nach einem der Ansprüche 1 bis 3, **dadurch gekennzeichnet, dass** beide Nuten (12, 13', 16), in die die Dichtungselemente (8, 9, 14) eingelegt sind, mittels Zusammenwirken aneinander grenzender Gehäuseteile (23, 24, 25, 29, 30, 31, 35) gebildet sind.

5. Ventileinsatzelement (1, 1') nach einem der Ansprüche 1 bis 4, **dadurch gekennzeichnet, dass** das Dichtungselement (8, 9), das unterhalb des Gewindeabschnitts angeordnet ist, zumindest teilweise über eine untere Stirnfläche des Ventileinsatzelements (1, 1') vorsteht, sodass es in einem Einbauzustand, in dem das Ventileinsatzelement (1, 1') in das Verbindungsstück eingeschraubt ist, als axiale Dichtung wirkt.

6. Ventileinsatzelement (1, 1') nach einem der Ansprüche 1 bis 5, mit einem rohrförmigen Anschlussabschnitt (6) und einem Anschlagabschnitt (7), wobei der Anschlussabschnitt (6) mindestens ein umlaufendes Dichtungselement (8, 9) aufweist, mittels dessen der Anschlussabschnitt (6) dichtend an einen Verbindungsabschnitt des Verbindungsstücks anschließt, und der Anschlagabschnitt (7) eine radial nach außen über den Anschlussabschnitt vorstehende Anschlagfläche (15) aufweist, die in einem Einbauzustand des Ventileinsatzelements (1, 1') mit einer korrespondierenden Stirnfläche des Verbindungsstücks zusammenwirkt, wobei der Anschlagabschnitt (7) mindestens ein umlaufendes Dichtungselement (14) aufweist, mittels dessen der Anschlagabschnitt (7) dichtend mit einer korrespondierenden Dichtfläche des Verbindungsstücks zusammenwirkt, wobei zumindest eines der Dichtungselemente (8, 9, 14) des Anschlussabschnitts (6) und/oder des Anschlagabschnitts (7) in eine gemäß mittels mindestens zweier aneinander grenzender Gehäuseteile (23, 24, 25, 29, 30, 31, 35) ausgebildete Nut (12, 13', 16) eingelegt ist.

7. Ventileinsatzelement (1, 1', 1 ") nach einem der Ansprüche 1 bis 6, **dadurch gekennzeichnet, dass** der Kunststoff ein thermoplastischer Kunststoff ist.

8. Ventileinsatzelement (1, 1', 1 ") nach einem der Ansprüche 1 bis 7, **dadurch gekennzeichnet, dass** der Kunststoff faserverstärkt ist.

9. Ventileinsatzelement (1, 1', 1 ") nach einem der Ansprüche 1 bis 8, **dadurch gekennzeichnet, dass** mindestens zwei der von Kunststoff gebildeten Gehäuseteile (23, 23', 24, 25, 29, 30, 31, 35) mittels Ultraschallschweißen miteinander verbunden sind oder miteinander verklebt sind oder werkzeuglos lösbar unter Ausbildung eines Formschlusses miteinander eingreifen.
